# EUROPÄISCHE PATENTANMELDUNG

(11) **EP 0 557 846 A1**
(43) Veröffentlichungstag der Anmeldung: **01.09.1993**
(21) Anmeldenummer: 93102329.5
(22) Anmeldetag: 15.02.1993
(51) Int. Cl.: A22C 13/00

(54) **Schlauchhülle, mit einer organochlorfreien O2- und wasserdampfundurchlässigen Auflage, Verfarhen zu ihrer Herstellung und sowie ihre Verwendung**

(30) Priorität: 25.02.1992 DE 4205631; 08.10.1992 DE 4233884
(71) Anmelder: Wolff Walsrode Aktiengesellschaft, D-29655 Walsrode (DE)
(72) Erfinder: Sirinyan, Kirkor, Dr., W-5060 Bergisch Gladbach 1 (DE); Müller, Hanns-Peter, Dr., W-5068 Odenthal (DE); Dhein, Rolf, Dr., W-4150 Krefeld (DE); Weber, Gunter, Dr., W-3032 Fallingbostel (DE); Meyer-Stork, Sebastian, Dr., W-3030 Walsrode (DE); Stiem, Michael, Dr., W-3031 Eicheloh (DE)
(74) Vertreter: Braun, Rolf, Dr.

(57) **Zusammenfassung**

Die Erfindung bezieht sich auf eine mehrlagige, organochlorfreie Schlauchhülle bestehend
a. aus einem regenerierten Cellulose-Träger,
b. gegebenenfalls aus einer Haftvermittlerschicht,
c. aus einer 5-40 µm starken, organochlorfreien, polymeren, H₂O-Dampfsperrschicht, dadurch gekennzeichnet, daß eine H₂O-Dampfdurchlässigkeit von höchstens 50 g/m² 24 h und eine Oberflächenspannung von ≦ 34 mN/m aufweist,
d. aus einer 5-40 µm starken, polymeren, organochlorfreien O₂-Sperrschicht, dadurch gekennzeichnet, daß sie eine Sauerstoffdurchlässigkeit von höchstens 120 cm³/m² 24 h bar und eine Oberflächenspannung von ≧ 38 N/m aufweist.

Ferner betrifft die Erfindung ihre Verwendung als Wursthülle für Würste vom Koch- und Brühwursttyp.

## Beschreibung

Die Erfindung bezieht sich auf eine mehrlagige, organochlorfreie Schlauchhülle bestehend
a. aus einem regenerierten Cellulose-Träger,
b. gegebenenfalls aus einer Haftvermittlerschicht,
c. aus einer 5-40 µm starken, organochlorfreien, polymeren, H₂O-Dampfsperrschicht, dadurch gekennzeichnet, daß sie eine H₂O-Dampfdurchlässigkeit von höchstens 50 g/m² 24 h und eine Oberflächenspannung von ≦ 34 mN/m aufweist,
d. aus einer 5-40 µm starken, polymeren, organochlorfreien O₂-Sperrschicht, dadurch gekennzeichnet, daß sie eine Sauerstoffdurchlässigkeit von höchstens 120 cm³/m² 24 h bar und eine Oberflächenspannung von ≧ 38 N/m aufweist.

Ferner ein Verfahren zu ihrer Herstellung sowie ihre Verwendung als Wursthülle für Würste vom Koch- und Brühwursttyp.

Im Rahmen der Erfindung ist unter "organochlorfreier Schlauchhülle" eine solche Hülle zu verstehen, die frei von kovalent gebundenen Chloratomen ist.

Schlauchhüllen auf Basis von Cellulose, beispielsweise aus regenerierter Cellulose, die durch längsaxiales Falten und Verkleben der sich überlappenden, längsaxial erstreckenden Randzonen hergestellt werden, sind bereits bekannt (s. beispielsweise EP 0037543, EP 0054162, US-P 2 148 884, US-P 2 226 442, US-P 2 685 769, US-P 2 685 770, US-P 2 757 495 und US-P 2 773 773).

Ferner können den Dokumenten DE 2 829 102 und DE 2 512 994 weitere Verfahren zur kontinuierlichen Herstellung faserverstärkter Cellulosehydratschläuche sowie Vorrichtungen zur Verfahrensdurchführung entnommen werden.

Derartige Schlauchhüllen sind u.a. gegenüber Wasserdampf und Sauerstoff durchlässig, was z.B. bei der Verwendung als Hülle für Würste vom Rohwurst-Typ gewünscht ist, sich jedoch bei der entsprechenden Nutzung für Würste vom Koch- und Brühwurst-Typ als nachteilig erweist. Für letztere ist eine gute Wasserdampf-Sperre der Schlauchhülle erforderlich, um Wasserverluste bei der Herstellung und Lagerung der Würste zu vermeiden. Ebenso wird hierfür eine gute Sauerstoff-Barriere benötigt, damit oxidative Schädigungen des Brätes auszuschließen sind.

Zur Erreichung dieser Sperrschicht-Eigenschaften werden daher Cellulose-Schlauchhüllen oft nachträglich beschichtet. Neben der Barriere-Wirkung müssen geeignete Auflagen auch über eine ausreichende Haftung zur Schlauchhülle und eine genügende Resistenz verfügen, um die verschiedenen thermischen und mechanischen Belastungen, die üblicherweise im Laufe des Wurstverarbeitungsprozesses auftreten, ohne Beeinträchtigung überstehen zu können. Außerdem muß die beschichtete Hülle durch die Fähigkeit zum hydrophilen Schrumpfen während der Wurstreifung und eine ausreichende Lagerstabilität gekennzeichnet sein.

Aus diesem Grund werden hierzu thermisch stabile, elastische, halogenierte Polyolefine, vorzugsweise Vinylidenchlorid-haltige Polyolefine (PVDC) bzw. deren Copolymerisate aus Acrylsäure, Methacrylsäure und Acrylnitril eingesetzt (vgl. beispielsweise DE 2 512 994 und EP 0 054 162).

Aus ökologischen Gründen besteht aber der Bedarf, für diesen Zweck organochlorfreie Systeme einzusetzen.

Zur Verwendung als künstliche Wursthüllen geeignete Schläuche auf Basis von Cellulosehydrat, die eine Beschichtung aus einem Vinylidenchlorid-haltigen Homo- oder Copolymer aufweisen, kommen entweder als Rollen oder einseitig abgebunden als Abschnitte in den Handel. Wursthüllen in größeren Mengen von beispielsweise 20-50 m oder mehr werden im allgemeinen zu etwa 20-50 cm langen, stabförmigen Gebilden gerafft und zusammengepreßt. Diese Gebilde werden auch "Raupen" genannt.

Die Schlauchraupen werden dann mit Hilfe bekannter Wurstabfüllmaschinen fortlaufend mit Wurstmasse gefüllt, indem man diese in die Raupe einpreßt. Dieses rationelle Wurstabfüllverfahren läßt sich jedoch mit den Schläuchen aus Cellulosehydrat mit einem Sperrschichtüberzug auf Basis von dünnen, 5-40 µm starken, chlorfreien Mono- oder Copolymerisaten nicht durchführen, da Schläuche dieser Art nicht der starken mechanischen Beanspruchung gewachsen sind. Durch die mechanische Beanspruchung wird der Schlauchüberzug vor allem im Kantenbereich der Schlauchfalten beschädigt. Dies führt zu einer unerwünschten Erhöhung der H₂O-Dampf- sowie O₂-Durchlässigkeit des Überzuges, wodurch die Haltbarkeit und die Qualität der Wurst nachhaltig beeinträchtigt werden.

Der Erfindung liegt deshalb die Aufgabe zugrunde, Schlauchhüllen zur Verfügung zu stellen, deren Beschichtung organochlorfrei ist und die gleichzeitig die bislang von PVDC-haltigen Auflagen erbrachten, für die Herstellung von Würsten des Koch- und Brühwurst-Typs notwendigen Eigenschaften erfüllen.

Diese Aufgabe wird überraschenderweise dadurch gelöst, daß man die Schlauchhülle mit einer mehrlagigen, organochlorfreien, polymeren Beschichtung verschiedener Oberflächenspannungen versieht.

Die erfindungsgemäße Lösung dieser Aufgabe ist überraschend, weil bekannterweise die Polymerauflagen mit der Oberflächenspannung von 36-45 mN/m wie Acrylnitrilcopolymerisate usw. hydrophile Kunststoffe sind. Ihre H₂O-Aufnahmekapazität liegt bei ≧ 2 %. Ferner liefert überraschenderweise die Kombination der verschiedenen Komponenten der vorliegenden Beschichtung deutlich bessere Barriereeigenschaften als die Summe der Sperrwirkung der einzelnen Komponenten.

Der Literatur kann entnommen werden, daß Polyvinylalkohole sich im trockenen Zustand durch ihr hervorragendes Barriereverhalten gegenüber O₂ auszeichnen (vgl. beispielsweise Polymer Handbook, Chapt. VI, S. 439, John Willey and Sons, New York, Toronto, Brisbane 1989).

Diese Polymerisate sind ebenso stark hydrophile Kunststoffe. Ihre H₂O-Aufnahmekapazität liegt bei ≧ 2 % und ihre gute O₂-Sperreigenschaft wird durch das aufgenommene Wasser negativ beeinflußt. Aus diesem Grund können sie in diesem Bereich nicht eingesetzt werden.

Gegenstand der Erfindung ist eine Schlauchhülle, insbesondere zur Verwendung als Wursthülle für Koch- und Brühwürste, dadurch gekennzeichnet, daß sie
a. aus einem regenerierten Cellulose-Träger,
b. gegebenenfalls aus einer Haftvermittlerschicht,
c. aus einer 5-40 µm starken, organochlorfreien O₂- und H₂O-Dampfsperrschicht, die eine H₂O-Dampfdurchlässigkeit von höchstens 50 g/m²·24 h bzw. eine Oberflächenspannung von ≦ 34 mN/m aufweist, und
d. aus einer 5-40 µm starken, chlorfreien O₂-Sperrschicht, die eine Sauerstoffdurchlässigkeit von höchstens 120 cm³/m²·24 h bar und eine Oberflächenspannung von ≧ 38 mN/m aufweist, besteht.

Als Basismaterial für die Herstellung von Schlauchhüllen werden bekannterweise Cellulose (Zellglas, regenerierte Cellulose, Cellulosehydrat) und Cellulosederivate wie Celluloseether, Kollagen und andere Proteine, Alginate, Stärken und andere Kohlenhydrate sowie weitere natürliche und synthetische Polymere eingesetzt. So können Cellulosebahnen, die nach dem Viskoseverfahren (vgl. beispielsweise US-PS 3 884 270) durch Denitrierung von Cellulosenitrat
oder Hydrolyse anderer Cellulosederivate mit wäßrigen oder alkoholischen Alkalilösungen (vgl. US-PS 3 546 209) hergestellt werden, eingesetzt werden. Auch andere Cellulosematerialien wie Celluloseether, z.B. Alkyl-oder Hydroxyalkylcellulose oder Mischether, können zu Trägern verarbeitet werden.

Selbstverständlich können auch Schlauchhüllen, die neben dem Cellulosehydrat noch zusätzliche Weichmacher wie Glykol, Glycerin, Polyglykol, Sorbit und Wasser enthalten, eingesetzt werden.

Ferner können zur Herstellung der erfindungsgemäßen Schlauchhüllen modifizierte Cellulosehydrattypen, die durch Umsetzung von Cellulosehydrat mit Alkylamin- und/oder Alkylamid-bis-di-methylen-triazinon-tetramethylen-triazinon-tetramethylol herstellbar sind, eingesetzt werden.

Die erfindungsgemäß geeigneten Schlauchhüllen können eine Faserverstärkung aufweisen. Hierzu ist bekannterweise z.B. der Einsatz von Hanf- oder Flachsfasern, oder die Verwendung von Synthesefasern auf der Basis von Polyamid, Polyester oder Polyacrylnitril etc. geeignet. Die bahnförmige Faserverstärkung kann ein textiles Gebilde wie z.B. einen Faservliesstoff als wirren oder geordneten Spinnfasern, ein Filament oder multiples Filament aus natürlichem oder synthetischem Material, ein Gewebe, Netzwerk, Gitter oder Gewirke darstellen.

Neben dem Basismaterial und gegebenenfalls einer Faserverstärkung können die Schlauchhüllen noch zusätzliche Komponenten enthalten, die z.B. als Feuchthaltemittel wirken. Außerdem ist der Einsatz weiterer Hilfsstoffe wie Pigmenten oder Antibakteriziden bekannt.

Auf Cellulose basierende Schlauchhüllen werden häufig nach dem Viskoseverfahren hergestellt. Viskoselösungen können bekanntermaßen z.B. durch die Umsetzung von Alkalicellulose mit Schwefelkohlenstoff zum Xanthat dargestellt werden. Beim Einsatz faserverstärkter Schlauchhüllen erfolgt die Applikation u.a. durch Beschichtung, Tauch-Imprägnierung oder Besprühung der Faserbahn mit der Viskose-Lösung (vgl. z.B. US 2 999 788). In den weiteren Verarbeitungsstufen werden die Viskosehaltigen Vorprodukte dann in einem schwefelsauren Fällbad behandelt, um die Cellulose zu regenerieren, anschließend mit Wasser neutral gewaschen, in einem Natriumsulfit-Bad entschwefelt und in einem weiteren Bad mit Feuchtehaltemitteln imprägniert. Nach der abschließenden Trocknung bei 80-140°C und Konditionierung weisen die Cellulose-Schlauchhüllen eine Dicke von 20-50 µm und ein Flächengewicht von 25-650 g/m² auf.

Anschließend werden diese Schlauchhüllen gegebenenfalls "haftfest" beschichtet.

Im Rahmen der Erfindung ist unter "haftfester Beschichtung" eine solche Verbundqualität zu verstehen, die unter den in der Praxis der Wurstverarbeitung üblicherweise auftretenden thermischen und mechanischen Belastung in hinreichender Weise erhalten bleibt.

Ferner ist im Rahmen der Erfindung unter "haftfesten Beschichtungen" eine solche Verbundqualität zu verstehen, die eine Zerstörung oder ein Ablösen der H₂O-Dampf und O₂-Sperrschichten von der Schlauchhülle trotz einer Lagerung für 7 Stunden in kochendem Wasser sowie nach Kontakt mit der Wurstmasse ausschließt.

Verfahren zum haftfesten Beschichtungen von Schlauchhüllen vorzugsweise auf Basis von regenerierter Cellulose, dadurch gekennzeichnet, daß man ihre Oberfläche mit Haftvermittlern vorzugsweise mit neutralen oder kationischen Polyaminen oder Polyamidpolyaminen versieht.

Solche Haftvermittler sind bekannt (vgl. beispielsweise US-PS 2 573 956 oder GB-PS 908.205). In diesem Zusammenhang sei auf die Reaktionsprodukte aus aliphatischen Polyaminen wie 2,6-Polyamid, Ethylentriamin und Epichlorhydrin hingewiesen. Ferner seien Polyamine, die durch Umsetzen von Epichlorhydrin mit Dipropylentriamin oder mit Bis-(3-Aminopropyl)-methylamin herstellt werden, erwähnt.

Die zur Durchführung der erfindungsgemäßen Beschichtung geeigneten Polyamid-Polyamine können bekannterweise durch Kondensation von aliphatischen Carbonsäuren, die 3-15 Kohlenstoffatome im Molekül aufweisen, mit einem der bereits erwähnten Polyamine, welche mindestens eine sekundäre und zwei primäre Amingruppen aufweisen, z.B. Polyalkylenpolyamine, hergestellt werden` Als Carbonsäure kommen primär Diglykolsäure, Bernsteinsäure, Glutarsäure und Adipinsäure in Frage. Selbstverständlich können ihre kationischen Typen ebensogut zur Durchführung des erfindungsgemäßen Verfahrens eingesetzt werden.

Der Haftvermittler wird vorzugsweise aus wäßriger Lösung aufgebracht und bei mäßiger Wärme (^{∼} 100°C) getrocknet. Die Haftvermittler-Lösung kann zweckmäßigerweise Cellulose-Weichmacher, insbesondere ein- oder mehrwertige Alkohole wie Glycerin und/oder Propandiol oder deren Mischungen in üblicher Menge enthalten. Selbstverständlich kann der Haftvermittler in Form einer organischen Lösung, z.B. in Benzin, Essigester, Toluol, Aceton oder Alkoholen, oder als Schmelze auf die Schlauchoberfläche aufgebracht werden.

Selbstverständlich sind auch andere Haftvermittler, sofern sie die an sie gerichteten Forderungen bezüglich der hohen Kochfestigkeit, mechanischen Stabilität und lebensmittelrechtlichen Unbedenklichkeit erfüllen, zur Durchführung des erfindungsgemäßen Verfahrens geeignet. In diesem Zusammenhang sei beispielsweise auf Polyacrylsäureester, deren Copolymere mit Styrol und Butadien und ferner auf Ethylen-Vinylacetat-Copolymere hingewiesen.

Ein wesentliches Merkmal der Erfindung ist es, daß die H₂O-Sperrschicht eine zusätzliche Olefinmodifizierung aufweist.

Die beanspruchte Olefinmodifizierung erfolgt erfindungsgemäß unter Verwendung von Wachsen natürlichen und synthetischen Ursprungs sowie deren Mischungen untereinander. Natürliche Wachse sind dabei z.B. Candelilla-, Carnauba-, Montan- und Paraffin-Wachse, synthetische u.a. Paraffin- und Polyethylen-Wachse. Solche Verbindungen sind bekannt und z.B. in Ullmanns Encyklopädie der technischen Chemie, Bd. 24, S. 1-49, Verlag Chemie, Weinheim (1983) ausführlich beschrieben.

Einschränkungen hinsichtlich des Schmelzbereiches der erfindungsgemäß einzusetzenden Wachse ergeben sich dadurch, daß einerseits eine genügende Heißwasser-Resistenz der Beschichtung gewährleistet sein muß und andererseits noch eine vollständige Verfilmung beim Beschichten möglich ist. Bevorzugt wird deshalb ein Schmelzbereich zwischen 50 und 110°C und besonders zwischen 60 und 90°C. In diesem Rahmen erweisen sich auch Mischungen höher und niedriger schmelzender Wachse als effektiv. Hinsichtlich der Teilchengröße der dispergierten oder emulgierten Wachse sind Partikeldurchmesser unter 0,1 µm und insbesondere unter 0,05 µm zu bevorzugen.

Eine bevorzugte Form des Auftrages der organohalogenfreien Ausstattung bildet die Applikation aus wäßriger Lösung, Emulsion oder Dispersion. Deshalb kann die Emulgier- bzw. Dispergierbarkeit der erfindungsgemäß geeigneten Wachse durch den an sich bekannten Einbau polarer Gruppen verbessert werden (vgl. z.B.: G.A. Russel, J.Am.Chem.Soc., 79 (1957) 3871; M. Irving et al., Polym. Degrad. Stab., 5 (1983) 467; N.G. Gaylord, J.Polym. Sci. Polym. Lett. Ed., 21 (1983) 23-30; A. Neyishi et al., J. Appl. Polym. Sci., 22 (1978) 2953 und A. Hoff, J. Appl. Poly. Sci., 29 (1984) 465). Die Verfahren dazu sind ebenfalls beschrieben (z.B. in G.M. Gale, Appl. Organomet. Chem., 2 (1988) 17-31).

Zur Durchführung der erfindungsgemäßen Polyolefinmodifizierung sind ferner Dispersionen oder Emulsionen auf der Basis von Ethylen, Propylen und Butylen bzw. deren Bi-, Ter- und Mischpolymerisate untereinander geeignet. Zur Durchführung des Verfahrens werden jedoch vorzugsweise solche mit einem Schmelzbereich zwischen 80-130°C, besonders bevorzugt die mit einem Schmelzbereich von 100-130°C, eingesetzt.

Ihre Molmasse kann im Bereich von 1.500-10⁶ g/Mol breit variiert werden. Solche mit der Molmasse 3.000-100.000 g/Mol sind jedoch besonders zu bevorzugen.

Die besagten Polyolefinemulsionen bzw. -dispersionen sind bekannt. Sie sind auf dem direkten Wege der Emulsions- bzw. Dispersionspolymerisation problemlos herstellbar (vgl. hierzu Kunststoff-Handbuch, Bd, IV, Polyolefine, Hanser Verlag München (1969) und DE 2 338 478).

Die Menge der Polyolefin bzw. Wachsmasse auf Basis von besagten Emulsionen oder Dispersionen kann zwischen 1-50 Gew.-% (bezogen auf die gesamte Bindemittelmasse) breit variiert werden. Mengen zwischen 10-30 Gew.-% und insbesondere Mengen zwischen 15-20 Gew.-% sind bevorzugt.

Im Rahmen der beanspruchten organohalogenfreien Ausstattung werden als Polymerharze erfindungsgemäß solche Systeme eingesetzt, die eine feindisperse Verteilung der beschriebenen Wachse und deren sichere Verankerung mit der Grenzfläche der Unterlage ermöglichen, so daß es zu einer thermisch und mechanisch beständigen Hydrophobierung des Trägermaterials kommt.

Als H₂O-sperrende Polymerharze werden bevorzugt Bi- und Terpolymere eingesetzt, die aus mindestens zwei der folgenden Monomere aufgebaut sind; Acrylate, Methacrylate, Vinylacetat, Vinylalkohol, Ethylen, Propylen, Butadien, Styrol, Acrylsäure, Methacrylsäure, Acrylamid- und Acrylnitril. Selbstverständlich können deren Mischungen untereinander zur Durchführung des erfindungsgemäßen Verfahrens eingesetzt werden.

Solche Copolymerisate und Verfahren zu ihrer Herstellung sind bekannt und ausführlich beschrieben (vgl. z.B.; R.W. Lenz, Organic Chemistry of Synthetic High Polymers, Interscience Publishers, New York (1976) oder Encyclopedia of Polymer Science and Engineering, Wiley-Interscience, New York (1985), S. 211-299).

Die Molmassen-Grenzen der erfindungsgemäß geeigneten Copolymerisate ergeben sich u.a. dadurch, daß bei zu geringem Molekulargewicht die Heißwasser-Resistenz der Beschichtung im Rahmen des zur Wurstherstellung notwendigen Brühens nicht ausreicht und daß bei zu hohem Molekulargewicht Verfilmungsschwierigkeiten beim Beschichten auftreten.

Die Variationsbreite hinsichtlich der Zusammensetzung der erfindungsgemäß geeigneten Bi-, Ter- bzw. Mischpolymerisate wird u.a. dadurch begrenzt, daß die Beschichtung einerseits nicht zu weich sein darf, weil die Hülle sonst bei der Lagerung als Rolle verklebt ("verblockt") und andererseits nicht zu spröde, da die Dichtigkeit der Beschichtung sonst infolge mechanischer Belastungen der Hülle nachlassen kann.

Daher wird z.B. bei der erfindungsgemäßen Verwendung von Copolymeren auf der Basis partiell verseiften Polyvinylacetats ein Hydrolysegrad von > 90 % sowie ein Molekulargewicht > 50.000 g/mol und Acrylnitril-haltiger Bi- bzw. Terpolymerisate mit einem Acrylnitrilgehalt von ≧ 25 Gew.-% und der Molmasse > 25.000 g/mol sowie bei Acrylat-haltigen Copolymeren eine Molmasse > 150.000 g/mol bevorzugt.

Erfindungsgemäß weisen die Schlauchhüllen eine zusätzliche O₂-Sperrschicht auf Basis von physikalisch trocknenden 1K- oder chemisch trocknenden 2K-PUR-(Polyurethan)-Systemen der Sauerstoffdurchlässigkeit von ≦ 120 cm³/m²·24 h bar und einer Oberflächenspannung von ≧ 38 N/m auf.

Geeignete Einkomponenten-Polyurethanlacke sind beispielsweise solche auf Basis von überwiegend linearen, voll ausreagierten Polyurethanen, die in organischen Lacklösungsmitteln, vorzugsweise jedoch in Wasser emulgiert, dispergiert oder gelöst sind und keine reaktiven Zentren mehr aufweisen, d.h. die physikalisch trocknenden Lacke (siehe z.B. Kunststoff-Handbuch, Band 7 "Polyurethane", herausgegeben von Günter Oertel, Carl-Hanser-Verlag, München/Wien (1983), Seite 551). Geeignete physikalisch trocknende Lacke dieses Typs sind beispielsweise jene, deren Binder auf einem ausreagierten linearen Polyurethan, aus (i) einem Polyesterdiol (ii) einem Kettenverlängerungsmittel und (iii) einem Diisocyanat basieren. Geeignete Polyesterdiole (i) zur Herstellung solcher Polyurethane sind beispielsweise Adipinsäure-Alkandiol-Polyesterdiole des Molekulargewichtsbereichs 600 bis 3000. Bei den Alkandiolen handelt es sich beispielsweise um Butandiol-1,4, Hexandiol-1,6, Neopentylglykol oder Mischungen derartiger Glykole. Geeignete Kettenverlängerungsmittel (ii) sind beispielsweise Diole der zur Herstellung der Polyesterdiole eingesetzten Art und auch Diamine wie Hexamethylendiamin oder Isophorondiamin. Geeignete Diisocyanate (iii) sind beispielsweise 4,4'-Diisocyanatodiphenylmethan, Hexamethylendiisocyanat oder Isophorondiisocyanat. Die Polyurethane werden in an sich bekannter Weise durch Umsetzung der Ausgangsmaterialien hergestellt, wobei ein Äquivalentverhältnis von Isocyanatgruppen zu gegenüber Isocyanatgruppen reaktionsfähigen Gruppen von ca. 0,9:1 bis 1,1:1 eingehalten wird.

Bei den besonders bevorzugten Zweikomponenten-Polyurethanlacken handelt es sich um solche, deren Bindemittel ein Zweikomponenten-Polyurethansystem darstellt wie sie beispielsweise in dem zuletzt zitierten Handbuch auf den Seiten 541 bis 544 beschrieben werden. Die Zweikomponenten-Bindemittel dieser Lacke bestehen im allgemeinen aus einer Polyisocyanatkomponente und einer Polyolkomponente, wobei die Mengen dieser Komponenten einem molaren NCO/OH-Verhältnis von 0,5:1 bis 2:1, vorzugsweise 0,8:1 bis 1,5:1 entsprechen. Geeignete Polyisocyanate sind die bekannten Lackpolyisocyanate, beispielsweise Biuret-, Isocyanat- oder Urethan-modifizierte Derivate einfacher Diisocyanate wie 2,4-Diisocyanatotoluol oder seinen Mischungen mit 2,6-Diisocyanatotoluol und insbesondere 1,6-Diisocyanatohexan, wobei die genannten Derivate im allgemeinen 10 bis 25 Gew.-% Isocyanatgruppen enthalten.

Geeignete Polyole sind insbesondere Polyesterpolyole, Polyetherpolyole oder Polyacrylatpolyole.

Die Polyesterpolyole haben im allgemeinen ein Molekulargewicht von 500 bis 5000 g/mol und weisen mindestens 2, vorzugsweise 2 bis 6 Hydroxylgruppen pro Molekül auf.

Die Polyetherpolyole haben im allgemeinen ein Molekulargewicht von 500 bis 5000 g/mol und weisen mindestens 2 Hydroxylgruppen pro Molekül auf.

Die Acrylatpolyole haben ein Molekulargewicht von 500 bis 5000 und enthalten im allgemeinen 1 bis 12 Gew.-% Hydroxylgruppen.

Die bevorzugte Applikation der organohalogenfreien Ausstattung geschieht aus wäßriger Lösung.

Um die bevorzugte Applikation der organohalogenfreien Ausstattung aus wäßriger Lösung, Emulsion oder Dispersion zu ermöglichen, können auch die genannten Polyurethane zur Verbesserung ihrer Dispergier- bzw. Emulgierbarkeit bekanntermaßen zusätzlich polare Gruppen wie Carboxyl-oder Hydroxylgruppen enthalten. Die erfindungsgemäßen wäßrigen Beschichtungssysteme auf der Basis der beschriebenen Polyurethane können zusätzlich übliche Hilfsstoffe zur Verbesserung der Dispergier-bzw. Emulgierbarkeit der PUR-Systeme und außerdem bekannte Zusatzmittel wie Katalysatoren, Pigmente, Lösungsmittel, Verlaufshilfsmittel, Füllstoffe, Gleitmittel, Abstandshalter usw. umfassen.

Um ein mögliches Verblocken zu verhindern, können die besagten PUR-Systeme mit zusätzlichen Bindemitteln der T_{G}>80°C in Mengen 0,5 bis 10 Gew.-% -bezogen auf die Gesamtbindemittelmasse -versetzt werden. In diesem Zusammenhang sei auf Styrol-Acrylat-Copolymerisate und Styrol-Acrylat-MSA (Maleinsäureanhydrid)-Terpolymerisate mit dem T_{G}-Bereich 80 bis 120°C hingewiesen.

Wie schon beschrieben besteht die besondere Wirkung der erfindungsgemäßen organohalogenfreien Ausstattung darin, daß im Verbund mit dem Trägermaterial überraschende synergistische Effekte hinsichtlich der Wasserdampf- und Sauerstoff-Dichtigkeit auftreten. Die durch die Kombination von Wachs und polymerem Bindemittel zu erzielenden Barriere-Eigenschaften sind wesentlich besser, als es aufgrund einer Addition der Sperrwirkungen der Einzelkomponenten bei vergleichbarer Auftragsstärke zu erwarten wäre. Außerdem ergibt sich eine deutlich erhöhte Stabilität des Eigenschaftsprofils bei thermischen und mechanischen Belastungen der Hülle, wie sie üblicherweise im Rahmen der Wurstherstellung und -distribution auftreten.

Den in wasseremulgierter bzw. -dispergierter Form vorliegenden erfindungsgemäßen Beschichtungsmitteln können Hilfsmittel zugesetzt werden, welche der Koagulation der Polymerteilchen entgegenwirken und dadurch die Stabilität der Dispersion erhöhen oder erst zu einer Emulgier- bzw. Dispergierbarkeit des Polymers führen. Bei den Hilfsmitteln handelt es sich im allgemeinen um anionische, kationische und neutrale, niedermolekulare, oligomere oder polymere Emulgatoren, Tenside oder Schutzkolloide der bekannten Art (vgl. z.B.: Ullmanns Encyklopädie der technischen Chemie, Bd. 2, S 273-281, Verlag Chemie, Weinheim (1972) oder ebenda Bd. 10, S. 449-473 (1975)).

Die Beschichtungen a und b können in beliebiger Reihenfolge vorgenommen werden.

Die Überführung der erfindungsgemäß zu verwendenden PUR-Systeme und Wachse bzw. deren Mischungen in eine wäßrige Lösung, Emulsion oder Dispersion wird nach bekannten Verfahren entweder durch Lösen in einem mit Wasser mischbaren Lösungsmittel wie Aceton oder Tetrahydrofuran und anschließendem Zusatz von Wasser und Entfernung des Lösungsmittels oder durch Anwendung hoher Scherkräfte, z.B. mit einem Ultra-Turrax-Rührer unter Verwendung von Düsen doer Dissolverscheiben, vollzogen.

Die Feststoff-Anteile an der wäßrigen Lösung, Emulsion ode Dispersion betragen vorzugsweise 15 bis 35 Gew.%. Für einen optimalen Auftrag der Beschichtung wird ein Viskositätsbereich von 50 - 60 mPas·sec empfohlen.

Ohne den Umfang der Erfindung einzuschränken, sei nochmal darauf hingewiesen, daß
- die Beschichtung eine ausreichende Haftung zum Untergrund besitzen und
- im gleichem Maße wie der Träger eine hydrophile Schrumpffähigkeit aufweisen soll.
- Ferner sollen diese Eigenschaften unter den im Rahmen des Wurstverarbeitungsprozesses üblicherweise auftretenden thermischen und mechanischen Belastungen beigehalten werden (vgl. hierzu G. Effenberger Wursthüllen Kunstdarm, Herstellung, Eigenschaften und Anwendung, Holzmann Buchverlag, D-8939 Bad Wörishofen (1991)).

Die vorliegende Erfindung soll anhand der nachfolgenden Ausführungsbeispiele näher erläutert werden. Die prozentualen Konzentrationsangaben beziehen sich auf den Feststoffgehalt und die angegebenen Permeationswerte sind gemäß DIN (Wasserdampf: DIN 53 122, 23°C, 85 % r. F.; Sauerstoff; DIN 53 380, 23°C, 75 % r. F.) ermittelt. Zur Bestimmung der Gewichtsverluste werden 50 cm lange Hüllenabschnitte des Kalibers 60 mm mit Brühwurstbrät gefüllt und im Kühlraum bei 2°C und 65 % d. F.) gelagert.

### Beispiel 1

Auf ein Al-Blech mit den Maßen 550 x 153 mm wird eine ca. 500 mm lange und 152 mm breite, mittels der Sprühflasche angefeuchtete, herkömmliche, faserverstärkte Schlauchhülle auf Basis von regenerierter Cellulose der Fa. Wolff Walsrode AG, D-3030 Walsrode, gezogen. Dieses wird dann in einen auf 165°C vorgeheizten Umlufttrockenschrank gegen den Thermofühler gestellt und bis zu einer Oberflächentemperatur von 118 bis 125°C getrocknet. Nach der Entnahme und Abkühlung wird nun auf den absolut plan liegenden Kunstdarm mit einer Handrakel eine wäßrige, 1,2 %ige Polyamidaminharz-Lösung des Typs Nadavin LT N der Fa. Bayer AG, D-5090 Leverkusen, aufgetragen. Die so mit einem Haftvermittler versehene Schlauchhülle wird im Trockenschrank bis zu einer Oberflächentemperatur von 130°C getrocknet und anschließend auf Raumtemperatur abgekühlt.

Nun wird die Probe mit einer wäßrigen handelsüblichen, aliphatischen 30 %igen PUR-Dispersion auf Basis eines fettsäuremodifizierten, lufttrocknenden Polyurethans des Typs VP LS 2943 E der Fa. Bayer AG, 5090 Leverkusen 1, beschichtet und anschließend bei 130°C getrocknet.

Anschließend wird die Probe mit einer 40 %igen wäßrigen Dispersion deren Bindemittel aus einem Copolymer mit 30 % Acrylnitril, 55 % Butadien, 6 % Methacrylsäure, 7 % Methacrylamid und 2 % Styrol besteht und zusätzlich 5 % handelsübliche Emulgatoren aufweist und ferner zusätzlich mit einer 10 %igen Polyolefindispersion des Typs Sebosan NGB der Fa. Stockhausen, D-5150 Krefeld, modifiziert ist, beschichtet und bei 120°C getrocknet.

Man bekommt eine mehrlagige Schlauchhülle. Die Schichtdicke der einzelnen Beschichtungen liegt bei 12 µm, die Oberflächenspannung der ersten Schicht liegt bei ^{∼}42 mN/m und die der Polyolefin-haltigen bei ^{∼} 30 mN/m.

Die Wasserdampfdurchlässigkeit der Gesamtauflage liegt bei ^{∼} 24 g/m².24 h und ihre O₂-Durchlässigkeit bei 28 cm³/m².24h.bar.

### Beispiel 2

Eine Schlauchhülle, nach Beispiel 1, wird mit dem Polyaminhaftvermittler und der PUR-Auflage nach Beispiel 1 versehen und anschließend mit einer 40 %igen wäßrigen. polyolefinmodifizierten Dispersion beschichtet und bei 120°C getrocknet. Das Bindemittel dieser Dispersion besteht aus einem Copolymer mit 30 % Acrylnitril, 45 % Butadien, 4 % Methacrylsäure, 7 % Methacrylamid und 14 % Styrol. Ferner enthält sie 5 % handelsübliche Emulgatoren und weist noch zusätzlich 15 % Polyolefindispersion des Typs Talofin E S der Fa. Stockhausen, D-4150 Krefeld, auf.

Man bekommt eine mehrlagige Schlauchhülle. Die Schichtdicke der einzelnen Beschichtungen liegt bei ^{∼} 12 µm, die Oberflächenapnnung der ersten Schicht liegt bei ∼ 42 mN/m und die der Polyolefin-haltigen bei ∼ 30 mN/m.

Die Wasserdampfdurchlässigkeit der Gesamtauflag liegt bei ∼ 24 g/m²·24 h und ihre O₂-Durchlässigkeit bei 28 cm³/m²·24 h.bar.

Die so hergestellten Beschichtungen zeichnen sich durch ihre Dehnbarkeit, Lackverankerung, Kochfestigkeit und Bräthaftung aus.

### Beispiel 3

Eine Schlauchhülle wird nach Beispiel 1 mit dem Polyaminhaftvermittler versehen. Nun wird die Probe nacheinander mit einer wäßrigen, handelsüblichen, aliphatischen, Emulgator-freien PUR-Dispersion des Typs VP LS 2952 E der Fa. Bayer AG und anschließend mit einer Abmischung bestehend aus 9,0 Teilen -COOH Gruppen-haltigen Polyacrylnitrildispersion -40 %ig, mit 40 % Acrylnitrilgehalt des Typs KA 8250 der Fa. Bayer AG - und 1,0 Teile Polyolefinemulsion - 50 %ige Wachsdispersion des Typs Mobilcer 216 der Fa. Mobil, D-2000 Hamburg, nach Beispiel 1 beschichtet.

Man bekommt eine mehrlagige Schlauchhülle. Die Schichtdicke der einzelnen Beschichtungen liegt bei ∼ 12 µm. Die Oberflächenspannung der ersten Auflage liegt bei ∼ 42 mN/m und die der zweiten bei ∼ 32 mN/m.

Ihre Wasserdampfdurchlässigkeit liegt bei ∼ 25 g/m²·24 h und ihre O₂-Durchlässigkeit bei ∼ 26 cm³/m²·24 h·bar.

Die so hergestellten Beschichtungen zeichnen sich durch ihre Dehnbarkeit, Haftfestigkeit, Lackverankerung und Bräthaftung aus.

### Beispiel 4

Eine Kunstdarmhülle wird nach Beispiel 3 präpariert und mit einer O₂-Sperrauflage auf PUR-Basis versehen. Nun wird sie mit einer wäßrigen Dispersion bestehend aus 18 % Joncryl 77 eine Acrylat-Dispersion der Fa. S.C. Johnson Polymer b.v., NL-3641 RV Mijdrecht, und 7 % Ultralube W 7090 - eine Wachsdispersion der Fa. Surface-Chemie GmbH, D-5448 Kastelaun - beschichtet. Die Verfilmung geschieht bis zum Erreichen einer Oberflächentemperatur von 145°C.

Es wird eine flexible, nicht klebende, gut haftende Beschichtung mit einer Trockenfilmstärke von ca. 12,8 µm erhalten, die einen WDDU (Wasserdampfdurchlässigkeit)Wert des Materials von 18 g/m²· 24 h und eine O₂-Durchlässigkeit von 30 cm³/m²·bar·24 h liefert. Bei der anschließenden Anwendung der so ausgestatteten Hülle für die Herstellung und Lagerung von Brühwürsten zeigt sich, daß die Beschichtung in gleichem Maße wie das Trägermaterial schrumpffähig ist und ihre Eigenschaften unter den dabei auftretenden thermischen und mechanischen Belastungen beibehält. Der Gewichtsverlust beträgt nach 10 Tagen 1,8 %.

### Beispiel 5

Entsprechend Beispiel 4 wird eine Kunstdarmhülle präpariert und lackiert, wobei Ultralube W 7090 durch 7 % Michem Lube 160 E (Fa. Michelman Int. & Co. SNC, B-6790 Aubange) ersetzt wird.

Es wird eine flexible, nicht klebende, gut haftende Beschichtung mit einer Trockenfilmstärke von ca. 13,2 µm erhalten, die einen WDDU-Wert des Materials von 10 g/m²·24 h und eine O₂-Durchlässigkeit von 28 cm³/m²·bar·24 h liefert. Bei der entsprechend Beispiel 4 vorgenommenen Anwendung als Hülle für die Brühwurst-Herstellung und -Lagerung ergibt sich ein Gewichtsverlust von 1,9 % nach 10 Tagen. Das Material entspricht hinsichtlich seiner Schrumpffähigkeit und Resistenz gegenüber thermischen und mechanischen Belastungen den erfindungsgemäßen Ansprüchen.

### Beispiel 6

Entsprechend Beispiel 1 wird eine Kunstdarmhülle präpariert und lackiert. Die letzte Beschichtung erfolgt mit einer wäßrigen Dispersion, die 30 % Styrofan DS 2306 X (Fa. BASF AG, W-6700 Ludwigshafen) und 3 % Michem Lube 182 (Fa. Michelman Int. & Co. SNC, B-6790 Aubange) enthält.

Es wird eine flexible, nicht klebende, gut haftende Beschichtung mit einer Trockenfilmstärke von ca. 15,2 µm erhalten, die einen WDDU-Wert des Materials von 14 g/m²·24 h und eine O₂-Durchlässigkeit von 28 cm³/m²·bar·24 h liefert. Bei der entsprechend Beispiel 4 vorgenommenen Anwendung als Hülle für die Brühwurst-Herstellung und -Lagerung ergibt sich ein Gewichtsverlust von 2,1 % nach 10 Tagen. Das Material entspricht hinsichtlich seiner Schrumpffähigkeit und Resistenz gegenüber thermischen und mechanischen Belastungen den erfindungsgemäßen Ansprüchen.

### Vergleichsbeispiel 1

Ein ca. 50 cm langer Abschnitt einer faserverstärkten Kunstdarm-Schlauchhülle (FRO-E, Kaliber 105 mm, Fa. Wolff Walsrode AG, D-3030 Walsrode) wird auf eine Glasplatte passender Größe gezogen und durch Besprühen mit Wasser angefeuchtet. Die so präparierte Probe wird dann in einem auf 180°C vorgeheizten Umluft-Trockenschrank bis zum Erreichen einer Oberflächentemperatur von 118-125°C getrocknet und anschließend auf Raumtemperatur abgekühlt. Die nachfolgende Beschichtung geschieht einseitig auf der völlig plan liegenden, aufgezogenen Schlauchhülle mit Hilfe einer Rakel. Zunächst wird eine Haftvermittlerschicht unter Verwendung einer wäßrigen Lösung, die 1,2 % eines Polyamid-Epichlorhydrin-Harz (Kymene SLX, Fa, Hercules, D-5200 Siegburg) und 10 % Glycerin enthält, appliziert. Die Trocknung der Probe erfolgt bis zum Erreichen einer Oberflächentemperatur von 125°C im Umlufttrockenschrank und anschließendem Abkühlen auf Raumtemperatur. In entsprechender Weise wird dann eine 32 %ige, wäßrige Polyethylen-Dispersion (Worlee-Wax 8510, Worlee GmbH, D-2400 Lübeck) aufgetragen. Die oberflächliche Endtemperatur der Probe beim Verfilmungsprozeß beträgt hier 145-150°C.

Es wird eine spröde, schlecht haftende Beschichtung mit einer Trockenfilmstärke von ca. 10 µm erhalten, die eine Wasserdampf-Durchlässigkeit (WDDU) des Materials von 120 g/m²·24 h liefert. Die unbeschichtete Kunstdarmhülle weist eine WDDU-Wert von > 2000 g/m²·24 h auf.

### Vergleichsbeispiel 2

Entsprechend Beispiel 4 wird eine Kunstdarmhülle präpariert und lackiert, wobei die Beschichtung mit einer polyolefinfreien 18 %igen, wäßrigen Dispersion eines Acrylat-Copolymers (Joncryl 77, Fa. S.C. Johnson Polymer b.v., NL-3641 RV Mijdrecht) erfolgt. Die Verfilmung geschieht unter den in Beispiel 1 angegebenen Bedingungen.

Es wird eine flexible, gering klebende, gut haftende Beschichtung mit einer Trockenfilmstärke von ca. 12,3 µm erhalten, die einen WDDU-Wert des Materials von 339 g/m² ·24 h und eine O₂-Durchlässigkeit von 200 cm³/m²·bar·24 h liefert. Die Sauerstoff-Durchlässigkeit der unbeschichteten Kunstdarmhülle beträgt 240 g/m²·bar·24 h.

## Patentansprüche

1. Organochlorfreie Schlauchhülle auf Basis von regenerierten Celluloseträgern, dadurch gekennzeichnet, daß ihre Oberfläche mit
a. einer 5-40 µm starken, polymeren, chlorfreien H₂O-Dampfsperrschicht, die eine H₂O-Dampfdurchlässigkeit von höchstens 50 g/m²·24 h bzw. eine Oberflächenspannung von ≦ 34 mN/m aufweist, und
b. einer zusätzlichen 5-40 µm starken, polymeren O₂-Sperrschicht auf Basis von Polyurethansystemen, die eine O₂-Durchlässigkeit von höchstens 120 cm³/m²·24 h·bar und eine Oberflächenspannung von 38 bis 50 N/m aufweist,
beschichtet ist.

2. Schlauchhülle nach Anspruch 1, dadurch gekennzeichnet, daß als Träger regenerierte Cellulose bzw. deren faserverstärkte Modifikationen vorliegt.

3. Schlauchhülle nach Anspruch 1 oder 3, dadurch gekennzeichnet, daß man zur Verstärkung Naturfasern, Hanffasern, Papierfasern, Polyamid-, Polyester- und/oder Polyacrylnitril-Fasern einsetzt.

4. Schlauchhülle nach einem der Ansprüche 1-3, dadurch gekennzeichnet, daß man gegebenenfalls als Haftvermittler wäßrige Lösungen, Dispersionen oder Emulsionen auf Basis von aliphatischen Polyamid-Polyaminen, die gegebenenfalls zusätzliche kationische Gruppen enthalten, verwendet.

5. Schlauchhüllen nach Ansprüchen 1 bis 4, dadurch gekennzeichnet, daß man zur Herstellung von O₂-Sperrschichten wäßrige, physikalisch trocknende aliphatische 1 K-PUR-Systme der Oberflächenspannung von 38-50 mN/m verwendet.

6. Schlauchhülle nach Anspruch 5, dadurch gekennzeichnet, daß 1 K-PUR-Systeme mit ungesättigten Fettsäuren modifiziert sind.

7. Schlauchhülle nach einem der Ansprüche 1-6, dadurch gekennzeichnet, daß als H₂O-Dampfsperrschicht polymere Bindemittel oder Bindemittelmischungen, die mindestens aus zwei der folgenden Monomere aufgebaut sind: Acrylate, Methacrylate, Vinylacetat, Vinylalkohol, Ethylen, Butadien, Styrol, Acrylsäure und Methacrylsäure, Acrylamid und Acrylnitril und eine zusätzliche Polyolefinmodifizierung aufweisen, vorliegen.

8. Schlauchhülle nach Anspruch 7, dadurch gekennzeichnet, daß sie Modifikatoren auf Basis von natürlichen und synthetischen Wachsen enthalten.

9. Verwendung der Schlauchhüllen gemäß einem der Ansprüche 1 bis 8 zur Herstellung von Wursthüllen.
